# EUROPÄISCHE PATENTSCHRIFT

(11) **EP 2 480 508 B1**
(45) Veröffentlichungstag und Bekanntmachung des Hinweises auf die Patenterteilung: **05.11.2014**
(21) Anmeldenummer: 10765570.6
(22) Anmeldetag: 22.09.2010
(51) Int. Cl.: C03C 3/087, C03C 4/00

(54) **ALUMOSILIKATGLÄSER MIT HOHER THERMISCHER BESTÄNDIGKEIT UND NIEDRIGER VERARBEITUNGSTEMPERATUR**
ALUMINOSILICATE GLASS HAVING HIGH THERMAL STABILITY AND LOW PROCESSING TEMPERATURE
VERRES ALUMINOSILICATE PRÉSENTANT UNE GRANDE RÉSISTANCE THERMIQUE ET UNE TEMPÉRATURE DE FAÇONNAGE PEU ÉLEVÉE

(30) Priorität: 25.09.2009 DE 102009042796
(43) Veröffentlichungstag der Anmeldung: 01.08.2012
(73) Patentinhaber: Schott AG, 55122 Mainz (DE)
(72) Erfinder: FECHNER, Jörg, Hinrich, 92637 Weiden (DE); OTT, Franz, 95692 Konnersreuth (DE); DICK, Erhard, 95701 Pechbrunn (DE); KASS, Christof, 95643 Tirschenreuth (DE)
(74) Vertreter: Sawodny, Michael-Wolfgang
(86) Internationale Anmeldenummer: PCT/EP2010/005781
(87) Internationale Veröffentlichungsnummer: WO 2011/035889

(56) Entgegenhaltungen:
- WO-A1-98/49111
- JP-A- 3 040 933
- JP-A- 2004 043 295
- JP-A- 2005 015 328
- NL-A- 6 707 461
- US-A1- 2005 003 136

## Beschreibung

Die Erfindung betrifft Alumosilikatgläser mit hoher thermischer Beständigkeit und niedriger Verarbeitungstemperatur.

Kalk-Natron-Gläser, auch bezeichnet als Alkali-Erdalkali-Silicatgläser, gehören zum ältesten bekannten Glastyp und stellen das am meisten verbreitete Glas ("Normalglas") dar. Kalk-Natron-Glas findet hauptsächlich als Flachglas, zum Beispiel Spiegel- oder Fensterglas, und als Verpackungsglas, beispielsweise für Flaschen, Lebensmittelverpackungen, Trinkgläser etc., Verwendung. Nachteilig an bekannten Kalk-Natron-Gläsern ist, dass diese nur eine relativ geringe thermische Beständigkeit, beispielsweise mit einer Transformationstemperatur ("Tg") im Bereich von etwa 490 bis 530°C, aufweisen. Hierdurch wird die Anwendung der bislang bekannten Kalk-Natron-Gläser deutlich eingeschränkt.

Es besteht ständig ein Bedarf, Glaszusammensetzungen zu variieren und zu modifizieren, um die Eigenschaften zu ändern und zu verbessern und an gewünschte Anwendungen besser anzupassen. Problematisch ist es in diesem Zusammenhang jedoch stets, dass die Verringerung oder Vergrößerung des Anteils einer Komponente bereits eine Vielzahl von Effekten auslösen kann, die sich unterschiedlich auf die Glaseigenschaften auswirken. Die Vorgänge und Auswirkungen bei Austausch oder Modifikation von mehreren Komponenten in einer Glaszusammensetzung sind noch komplexer und häufig schwierig oder gar nicht mehr vorhersagbar. Es ist daher relativ schwer, für spezielle Anwendungen maßgeschneiderte Glaszusammensetzungen bereitzustellen.

Es gibt zahlreiche Veröffentlichungen im Stand der Technik, die sich mit gattungsgemäßen Gläsern beschäftigen.

Die JP 07-101748 A beschreibt aluminiumarme, alkalihaltige Gläser für Plasma-Display-Panels, wobei die Glaszusammensetzung aufgebaut ist aus 0,3 - 2,5 Gew.-% Li₂O, 7,0 - 12 Gew.-% Na₂O, 1,5 - 4,5 Gew.-% K₂O, 0 - 5,0 Gew.-% MgO, 6,0 - 9,0 Gew.-% CaO, 0 - 5 Gew.-% SrO, 3,5 - 15,0 Gew.-% BaO, 2,0 - 4,5 Gew.-% Al₂O₃, 57,0 - 68,0 Gew.-% SiO₂, 0 - 5,0 Gew.-% ZrO₂ und 0 - 0,5 Gew.-% CeO₂, wobei die Summe Li₂O + Na₂O + K₂O 9,0 - 16,0 Gew.-% beträgt.

Die US 5,858,897 beschreibt eine Glaszusammensetzung für ein Substrat, das insbesondere für ein flaches Display, bevorzugt ein Plasmadisplay (PDP, plasma display panel) geeignet ist. Die Glaszusammensetzung besteht im Wesentlichen aus: 59 - 72 Gew.-% SiO₂, 1 - 15 Gew.-% Al₂O₃, 0,5 - 9 Gew.-% MgO, 0,5 - 11 Gew.-% CaO, 0 - 6 Gew.-% SrO, 0 - 5 Gew.-% BaO, 4-19 Gew.-% MgO+CaO+SrO+BaO, 0 - 9 Gew.-% Na₂O, 4 - 21 Gew.-% K₂O, 10 - 22 Gew.-% Na₂O + K₂O, 0,5 - 10,5 Gew.-% ZrO₂, wobei die Differenz zwischen dem SiO₂-Gehalt und dem Al₂O₃-Gehalt 50 bis 71 Gew.-% und die relative Dichte weniger als 2,6 beträgt.

Ferner offenbart die EP 0 769 481 A1 eine Glaszusammensetzung für ein Substrat insbesondere für Plasmadisplays, wobei die Glaszusammensetzung umfasst: 52 - 62 Gew.-% SiO₂, 5 - 12 Gew.-% Al₂O₃, 0 - 4 Gew.-% MgO, 3 - 5,5 Gew.-% CaO, 6 - 9 Gew.-% SrO, 0-13 Gew.-% BaO, 17 - 27 Gew.-% MgO+CaO+SrO+BaO, 7 - 14 Gew.-% Li₂O + Na₂O + K₂O, 0,2 - 6 Gew.-% ZrO₂ und 0 - 0,6 Gew.-% SO₃. Ein derart hoher SrO-Anteil in der Glaszusammensetzung hat jedoch große Nachteile. SrO ist ein relativ kostspieliges Material, so dass sich die Herstellung des Glases deutlich verteuert. Die in der EP 0 769 481 A1 behaupteten Vorteile, dass sich die Transformationstemperatur deutlich erhöhen und der thermische Wärmeausdehnungskoeffizient ansteigen soll, konnten erfindungsgemäß nicht nachvollzogen werden. Vielmehr zeigte ein erhöhter SrO-Gehalt für die erfindungsgemäßen Anwendungsbereiche keinen positiven Einfluss auf die Eigenschaften und Wirkungen; SrO ist daher erfindungsgemäß in den hier beschriebenen hohen Mengen nicht vorhanden.

Weiterhin beschreibt die EP 0 879 800 A1 solarisationsstabile Aluminosilicatgläser, die für den Einsatz in der Displaytechnik, insbesondere für Plasma-Display-Panels, geeignet sind und folgende Zusammensetzung aufweisen:

| | |
|---|---|
| SiO₂ | 56 - 72 %; |
| Al₂O₃ | 5 - 11 %; |
| Na₂O | 0 - 5 Gew.-% |
| K₂O | <9 - 15 Gew-% mit |
| Na₂O + K₂O | ≥10 Gew.-% |
| CaO | 0 - 10 Gew.-% |
| SrO | 0,5 - 18 Gew.-% |
| BaO | 0 - 10 Gew.-% |
| CaO + SrO + BaO | 8 ≤ 17 Gew.-% |
| ZrO₂ | 1 - 6 Gew.-% |
| TiO₂ | 0,2 - 5 Gew.-%; |

Ferner bezieht sich die WO 98/49111 A1 auf eine Zusammensetzung zur Erzeugung eines Glases eines Plasmadisplays mit einer Dichte von weniger als 2,70 g/cm³ und einer Viskosität bei der Liquidustemperatur von mindestens 3000 Poise, wobei die Zusammensetzung in Gewichtsprozent auf Basis des Oxids umfasst:

| | |
|---|---|
| SiO₂ | 56 - 72 %; |
| R₂O | 8 - 14 %; |
| R'O | 10 - 17 %; |
| Al₂O₃ | 5 - 11 %; |
| B₂O₃ | 0 - 5 %; |
| ZrO₂ | 0 - 7 %; |
| TiO₂ | 0 - 2 %; |
| P₂O₅ | 0 - 3 %; |

wobei R eine Gruppe I (Alkalimetall-) Oxid und R' eine Gruppe II (Erdalkalimetall-) Oxid darstellt, die Menge an K₂O im R₂O weniger als 4 % beträgt, die Gesamtmenge von SiO₂, Al₂O₃ und ZrO₂ größer als 71 % beträgt, die Gesamtmenge von BaO und SrO, wenn vorhanden, in R'O ein Maximum von 8 % beträgt.

Die US 2005/0003136 A1 bezieht sich auf eine Glaszusammensetzung, umfassend:

| | |
|---|---|
| 59 - 68 Gew.-% | SiO₂; |
| 9,5 - 15 Gew.-% | Al₂O₃; |
| 0 - 1 Gew.-% | Li₂O; |
| 3 - 18 Gew.-% | Na₂O; |
| 0 - 3,5 Gew.-% | K₂O; |
| 0 - 15 Gew.-% | MgO |
| | |
| 1 - 15 Gew.-% | CaO; |
| 0 - 4,5 Gew.-% | SrO; |
| 0 - 1 Gew.-% | BaO; |
| 0 - 2 Gew.-% | TiO₂ und |
| 1 - 10 Gew.-% | ZrO₂. |

Die JP 2005/015328 bezieht sich auf eine Glaszusammensetzung, die in Gewichtsprozent enthält:

| | |
|---|---|
| 59 - 68 % | SiO₂, |
| 9,5 - 15% | Al₂O₃, |
| 0 - 1 % | Li₂O, |
| 3 - 18% | Na₂O, |
| 0 - 3,5 % | K₂O, |
| 0 - 15% | MgO, |
| 1 - 15% | CaO, |
| 0 - 4,5 % | SrO, |
| 0 - 1 % | BaO, |
| 0 - 2 % | TiO₂, |
| 1 - 10% | ZrO₂. |

Die Glaszusammensetzung eignet sich als Glassubstrat für magnetische Aufzeichnungsmedien und kann als chemisch widerstandsfähiger Glasartikel durch eine Ionenaustauschbehandlung ausgebildet werden.

Die NL 6 707 461 A beschreibt Glaszusammensetzungen, umfassend:

| | |
|---|---|
| 57 - 62 % | SiO₂, |
| 8 - 12% | CaO, |
| | |
| 4,5 - 8,5 % | Al₂O₃, |
| 2 - 5 % | MgO, |
| 4,5 - 16 % | Na₂O, |
| 0 - 4,5 % | BaO, |
| 1 - 4 % | ZnO, |
| 0 - 3 % | ZrO₂, |
| 0,3 - 1,5 % | Fe₂O₃, |
| 0 - 1,5 % | F₂ sowie |
| 0,10 - 0,50% | K₂O, wobei |
| 1 ≤ (MgO+CaO+BaO+ZnO)/Na₂O ≤ 1,4. | |

Die JP 3040933 A offenbart eine Glaszusammensetzung in Gewichtsprozent, umfassend:

| | |
|---|---|
| 55 - 65 % | SiO₂, |
| 5 - 15% | Al₂O₃, |
| 3 - 12% | CaO, |
| 17-25 % | MgO+CaO+SrO+BaO, |
| 6 - 12 % | Li₂O+Na₂O+K₂O, |
| 0,5 - 6 % | ZrO₂, |
| 0,5 % | SO₃+Al₂O₃+Sb₂O₃, |
| 0 - 3 % | SnO₂+TiO₂, |
| 0 - 5 % | La₂O₃. |

Schließlich offenbart die US 2005/0003136 A1 eine Glaszusammensetzung, die eine ausgezeichnete Wärmebeständigkeit aufweist sowie ein sehr gutes lonenaustauschvermögen zeigt. Eine erhöhte mechanische Festigkeit des Glases wird durch eine zusätzliche chemische Behandlung unter Ionenaustausch erreicht. Die Glaszusammensetzung umfaßt: 59 bis 68 Gew.-% SiO₂, 9,5 bis 15 Gew.-% Al₂O₃, 0 bis 1 Gew.-% Li₂O, 3 bis 18 Gew.-% Na₂O, 0 bis 3,5 Gew.-% K₂O, 0 bis 15 Gew.-% MgO, 1 bis 15 Gew.-% CaO, 0 bis 4,5 Gew.-% SrO, 0 bis 1 Gew.-% BaO, 0 bis 2 Gew.-% TiO₂ und 1 bis 10 Gew.-% ZrO₂. Diese Glaszusammensetzung soll bevorzugt als Glassubstrat für magnetische Aufzeichnungsmedien zum Einsatz kommen. Nachteilig an dieser Glaszusammensetzung ist jedoch die nicht ausreichende Kristallisationsbeständigkeit, d.h. während des Abkühlens des Glases beim Formgebungsprozeß, beispielsweise beim Rohrzug, entstehen Entglasungskristalle, die an der Glasoberfläche die Formgebung des Glases beeinträchtigen. Außerdem geht durch eine Kristallisation der eigentliche Glascharakter verloren.

Es besteht daher ein Bedarf, die bekannten Gläser hinsichtlich ihrer Eigenschaften zu verbessern.

Demnach liegt der vorliegenden Erfindung die Aufgabe zugrunde, die Nachteile des Standes der Technik zu vermeiden, und eine Alternative zu Kalk-Natron-Gläsern bereitzustellen, welche eine ähnliche thermische Dehnung von etwa 8 bis 10 x 10⁻⁶/K und eine höhere thermische Belastbarkeit (Tg) bei gleichzeitig ähnlichen bzw. nur geringfügig erhöhten Verarbeitungstemperaturen (VA) im Vergleich zu Kalk-Natron-Gläsern aufweisen. Weiterhin sollte der Gehalt an Bor aufgrund toxikologischer als auch wirtschaftlicher Überlegungen so niedrig wie möglich sein.

Erfindungsgemäß wird die Aufgabe der vorliegenden Erfindung durch ein Alumosilikatglas gelöst, umfassend oder bestehend aus der folgenden Glaszusammensetzung (in Gew.-% auf Oxidbasis):

| | |
|---|---|
| SiO₂ | 49 - 69 Gew.-%, |
| bevorzugt SiO₂ | 49 - < 59 Gew.-%, |
| B₂O₃ | 0 - 2 Gew.-%, |
| bevorzugt B₂O₃ | 0 Gew.-%, |
| Al₂O₃ | > 4,7 - 15 Gew.-%, |
| bevorzugt Al₂O₃ | > 5 - 15 Gew.-%, |
| Li₂O | 0 - 4 Gew.-%, |
| bevorzugt Li₂O | 0 - <0,3 Gew.-%, |
| Na₂O | > 10 - 18 Gew.-% |
| K₂O | >0 - 8 Gew.-%, |
| bevorzugt K₂O | >0 - <5 Gew.-%, |
| insbesondere K₂O | >0 - <4 Gew.-%, wobei die |
| Summe Li₂O+ Na₂O+ K₂O | >10 - 19 Gew.-% beträgt, und |
| MgO | 0 - 6 Gew.-% |
| CaO | 5 - <12 Gew.-% |
| SrO | 0 - 5 Gew.-%, |
| bevorzugt SrO | 0 - <0,5 Gew.-%, |
| BaO | 0 - 12 Gew.-%, |
| bevorzugt BaO | >1 - 12 Gew.-%, |
| bevorzugter BaO | >1 - <3,5 Gew.-%, |
| wobei die | |
| Summe MgO+CaO+SrO+BaO | 5 - 19 Gew.-% beträgt, und |
| F | 0 - 3 Gew.-% |
| TiO₂ | 0 - 10 Gew.-%, |
| bevorzugt TiO₂ | >0,1 - 10 Gew.-%, |
| Fe₂O₃ | 0 - 0,5 Gew.-% |
| ZrO₂ | >0,5 - 9 Gew.-% |
| CeO₂ | 0 - 3 Gew.-% |
| WO₃ | 0 - 3 Gew.-% |
| Bi₂O₃ | 0 - 3 Gew.-% |
| MoO₃ | 0 - 3 Gew.-%. |

Dem obigen Glas/der Glasschmelze können übliche Läutermittel, wie z.B. Sulfate, Chloride, Sb₂O₃, As₂O₃, SnO₂, zugesetzt werden.

Die Zusammensetzung der erfindungsgemäßen Alumosilikatgläser liegt bevorzugt im Bereich:

| | |
|---|---|
| SiO₂ | 49 - 69 Gew.-%, |
| bevorzugt SiO₂ | 49 - 58,5 Gew.-%, |
| B₂O₃ | 0 Gew.-% |
| Al₂O₃ | >4,7 - 14 Gew.-%, |
| bevorzugt Al₂O₃ | > 5 - 14 Gew.-%, |
| Li₂O | 0 - 4 Gew.-%, |
| bevorzugt Li₂O | 0 - <0,3 Gew.-%, |
| Na₂O | >10 - 18 Gew.-% |
| K₂O | >0 - 8 Gew.-%, |
| bevorzugt K₂O | >0 - <5 Gew.-%, |
| insbesondere K₂O | >0 - <4 Gew.-%, wobei die |
| Summe Li₂O+ Na₂O+ K₂O | >10 - 19 Gew.-% beträgt, und |
| MgO | 0 - 5 Gew.-% |
| CaO | 7 - <12 Gew.-% |
| SrO | 0 - 5 Gew.-%, |
| bevorzugt SrO | 0 - <0,5 Gew.-%, |
| BaO | 0 - 10 Gew.-%, |

| | |
|---|---|
| bevorzugt BaO | >1 - 10 Gew.-%, |
| bevorzugter BaO | >1 - <3,5 Gew.-%, |
| wobei die | |
| Summe MgO+CaO+SrO+BaO | 7 - 19 Gew.-% beträgt, und |
| F | 0 - 3 Gew.-% |
| TiO₂ | 0 - 5 Gew.-%, |
| bevorzugt TiO₂ | >0,5 - 5 Gew.-% |
| Fe₂O₃ | 0 - 0,5 Gew.-% |
| ZrO₂ | >1 - 9 Gew.-% |
| CeO₂ | 0 - 3 Gew.-% |
| WO₃ | 0 - 3 Gew.-% |
| Bi₂O₃ | 0 - 3 Gew.-% |
| MoO₃ | 0 - 3 Gew.-%. |

Dem obigen Glas/der Glasschmelze können übliche Läutermittel, wie z.B. Sulfate, Chloride, Sb₂O₃, As₂O₃, SnO₂, zugesetzt werden.

Die Zusammensetzung der erfindungsgemäßen Alumisilicatgläser liegt weiterhin bevorzugt im Bereich:

| | |
|---|---|
| SiO₂ | 49 - 66 Gew.-%, |
| bevorzugt SiO₂ | 49 - 58,5 Gew.-%, |
| Al₂O₃ | >4,7 - 14 Gew.-%, |
| bevorzugt Al₂O₃ | > 5 - 14 Gew.-%, |
| Na₂O | >11 - 18 Gew.-% |
| K₂O | >0,5 - 8 Gew.-%, |
| bevorzugt K₂O | >0,5 - <5 Gew.-%, |
| insbesondere K₂O | >0,5 - <4 Gew.-%, wobei die |
| Summe Na₂O+ K₂O | >11 - 19 Gew.-% beträgt, und |
| MgO | 0,1 - 3 Gew.-% |
| CaO | 7 - <12 Gew.-% |
| BaO | >1 - 9 Gew.-%, |
| bevorzugt BaO | 1,5 - <3,5 Gew.-%, wobei die |
| Summe MgO+CaO+BaO | 8,2 - 19 Gew.-% beträgt, und |
| F | 0 - 3 Gew.-% |
| TiO₂ | 0 - 5 Gew.-%, |
| bevorzugt TiO₂ | >0,5 - 5 Gew.-% |
| Fe₂O₃ | 0 - 0,5 Gew.-% |
| ZrO₂ | >1 - 9 Gew.-% |
| CeO₂ | 0 - 3 Gew.-% |
| WO₃ | 0 - 3 Gew.-% |
| Bi₂O₃ | 0 - 3 Gew.-% |
| MoO₃ | 0 - 3 Gew.-%, |

wobei das Glas kein B₂O₃, kein Li₂O und kein SrO enthält.

Dem obigen Glas/der Glasschmelze können übliche Läutermittel, wie z.B. Sulfate, Chloride, Sb₂O₃, As₂O₃, SnO₂, zugesetzt werden.

Dem obigen Glas/der Glasschmelze können übliche Läutermittel, wie z.B. Sulfate, Chloride, Sb₂O₃, As₂O₃, SnO₂, zugesetzt werden.

Gegenstand dieser Erfindung ist demnach ein Alumosilikatglas, dass als Alternative für ein Kalk-Natron-Glas herangezogen werden kann, da es nicht nur dessen vorteilhafte Eigenschaften in hohem Maße aufweist, sondern darüber hinaus auch noch weitere vorteilhafte Eigenschaften zur Verfügung stellt. Die erfindungsgemäßen Gläser zeigen eine deutlich höhere Transformationstemperatur Tg im Bereich von 580°C bis 640°C als herkömmliche Kalk-Natron-Gläser. Gleichzeitig wird eine ähnliche oder nur geringfügig erhöhte Verarbeitungstemperatur ("VA") im Bereich von 1065°C bis 1140°C, verglichen mit Kalk-Natron-Gläsern, erhalten, die üblicherweise Verarbeitungstemperaturen im Bereich von 1030°C bis 1140°C besitzen. Zusätzlich wird von den erfindungsgemäßen Gläsern die für Kalk-Natron-Gläser charakteristische thermische Dehnung von etwa 8 bis 10 x 10⁻⁶/K (thermischer Wärmeausdehnungskoeffizient) im Temperaturbereich von 20 bis 300°C erreicht. Um diese Eigenschaften, insbesondere eine hohe Dehnung, eine hohe Transformationstemperatur Tg und eine niedrige Verarbeitungstemperatur, umsetzen zu können, enthält das Glas hohe Gehalte an Na₂O von >10 Gew.-%, bevorzugt > 12 Gew.-%. Auch für spezielle Anwendungen der erfindungsgemäßen Gläser als Substratgläser, beispielsweise als CIGS-Substratgläser das sind Kupfer-Indium-Gallium Sufid und/oder Selenid-Substratgläser, ist ein Na₂O-Gehalt von >10 Gew.-% ein wesentliches Merkmal. Natrium leistet hierbei einen signifikanten Beitrag zur Steigerung des Wirkungsgrades, indem Na-Ionen in die CIGS-Schicht diffundieren können. Der hohe Natrium-Gehalt trägt daher entscheidend dazu bei, dass die erfindungsgemäß gewünscht hohe Dehnung und ein hoher Tg-Wert bei gleichzeitig niedriger Verarbeitungstemperatur erzielt werden.

Im Rahmen der Erfindung weiterhin von Bedeutung ist, dass im erfindungsgemäßen Glas die Gehalte von CaO im Bereich von 5 bis <12 Gew.-% und ZrO₂ im Bereich von 0,5 bis 9 Gew.-% liegen. Die gewünschten Eigenschaften des Glases können in besonders hohem Maße realisiert werden, wenn der Quotient (Gew.-%) aus Na₂O/(MgO+CaO+ZrO₂) im Bereich von 0,5 bis 0,9, bevorzugt im Bereich von 0,6 bis 0,9, besonders bevorzugt im Bereich von 0,6 bis 0,8 eingestellt wird. Durch Einstellung des Quotient (Gew.-%) aus Na₂O/(MgO+CaO+ZrO₂) im beschriebenen Bereich, insbesondere aufgrund des hohen Na₂O-Gehalts von > 10 Gew.-%, bzw. > 12 Gew.-%, gelingt es besonders gut, die thermische Wärmeausdehnung bzw. den thermischen Wärmeausdehnungskoeffizienten (Coefficient of thermal expansion, CTE) im Bereich der Kalk-Natron-Gläser zu halten und die Verarbeitungstemperatur in den Bereich von Kalk-Natron Gläsern abzusenken.

Beschrieben wird daher auch auf ein Verfahren zur Auswahl eines Alumosilikatglas mit einem thermischen Wärmeausdehnungskoeffizienten im Bereich von 8 bis 10 x 10⁻⁶/K im Temperaturbereich von 20 bis 300°C, einer Transformationstemperatur Tg im Bereich von 580°C bis 640°C sowie einer Verarbeitungstemperatur VA im Bereich von 1065°C bis 1140°C, wobei die Zusammensetzung des Glases so ausgewählt wird, dass der Quotient (Gew.-%) aus Na₂O/(MgO+CaO+ZrO₂) im Bereich von 0,5 bis 0,9 bevorzugt im Bereich von 0,6 bis 0,9, besonders bevorzugt im Bereich von 0,6 bis 0,8 liegt.

Erfindungsgemäß wurde weiterhin festgestellt, dass es durch Überwachung der Summe MgO+CaO+ZrO₂ möglich ist, ein sogenanntes "kurzes Glas" zu erhalten, wobei die Differenz zwischen Verarbeitungstemperatur und Transformationstemperatur Tg möglichst klein wird, aber gleichzeitig eine relativ hohe Transformationstemperatur Tg erreicht wird. Besonders bevorzugt liegt die Summe aus MgO+CaO+ZrO₂ erfindungsgemäß daher im Bereich von 10 bis 20 Gew.-%, bevorzugter im Bereich von 14 bis <19 Gew.-%.

Erfindungsgemäß kommen somit Alumosilikatgläser zum Einsatz. Diese umfassen als Hauptkomponente SiO₂ und Al₂O₃ sowie Alkali- und Erdalkalioxide und gegebenenfalls weitere Komponenten.

Das Grundglas enthält üblicherweise bevorzugt mindestens 49 Gew.-%, vorzugsweise mindestens 50 Gew.-%, insbesondere bevorzugt mindestens 52 Gew.-% an SiO₂. Die Höchstmenge an SiO₂ beträgt 69 Gew.-% SiO₂. Ein besonders bevorzugter Bereich des SiO₂-Gehalts liegt bei 49 bis < 59 Gew.-%, insbesondere 49 bis 58,5 Gew%. Bei zu geringen Gehalten, d.h. einem SiO₂-Gehalt unterhalb 49 Gew.-%, verschlechtert sich die chemische Beständigkeit des Glases. Bei höheren Anteilen, insbesondere bei einem SiO₂-Gehalt von 59 Gew.-% oder darüber, nimmt die Kristallisationsneigung des Glases deutlich zu. Im besonders bevorzugten Bereich wird die Kristallisationsbeständigkeit und die chemische Beständigkeit des Glases besonders begünstigt, so dass gegenüber Gläsern mit höherem SiO₂-Gehalt eine reduzierte Kristallisationsanfälligkeit vorliegt.

Die Menge an Al₂O₃ beträgt mindestens 4,7 Gew.-%, besonders bevorzugt > 4,7 Gew.-%, ganz besonders bevorzugt > 5 Gew.-%. Besonders bevorzugt liegt der Al₂O₃-Gehalt ≤ 15 Gew.-%, bevorzugt ≤ 14% und in einer besonders bevorzugten Ausführungsform ≤ 10 Gew.-%, um eine gute Schmelzbarkeit zu ermöglichen. Ganz besonders bevorzugt sind Bereiche von > 5 bis 14 Gew.-%, insbesondere Bereiche von 8 bis 12 Gew.-%. Der Gehalt kann abhängig vom Einsatzzweck variiert werden. Eine Überschreitung des Al₂O₃-Gehalts von 15 Gew.-% hat den Nachteil verschlechterter Einschmelzbarkeit. Eine Unterschreitung eines Al₂O₃-Gehalts von 4 Gew.-% hat den Nachteil, dass die chemische Beständigkeit des Glases verschlechtert wird und die Neigung zur Kristallisation zunimmt.

Von den Alkalioxiden Lithium, Natrium und Kalium ist insbesondere Natrium von wesentlicher Bedeutung, wie bereits erläutert. Na₂O ist erfindungsgemäß in einer Menge von >10 bis 18 Gew.-%, insbesondere in einer Menge von >11 bis 18 Gew.-%, noch bevorzugter in einer Menge von >12 bis 18 Gew.-% enthalten. Der Gehalt an K₂O beträgt >0 bis 8 Gew.-%, bevorzugt >0 bis < 5 Gew.-%, bevorzugter >0 bis < 4 Gew.-%. Der Li₂O-Gehalt beträgt erfindungsgemäß 0 bis 4 Gew.-%, bevorzugter, 0 bis 1,5 Gew.-%, insbesondere bevorzugt 0 bis < 0,3 Gew.-%. Die Zugabe von Li₂O kann zur Einstellung der thermischen Wärmeausdehnung (CTE) und zur Absenkung der Verarbeitungstemperatur dienen.

Insbesondere bevorzugt liegt der Li₂O -Gehalt jedoch bei < 0,3 Gew.-% oder das Glas ist völlig frei von Li₂O. Es gibt bisher keine Hinweise, dass Li₂O ähnlich wie Na₂O wirken würde, da dessen Diffusion vermutlich zu hoch ist. Außerdem ist Li₂O als Rohstoff teuer, so dass es vorteilhaft ist, kleinere Mengen einzusetzen.

Eine Überschreitung des jeweils angegebenen Alkalioxid-Gehalts hat den Nachteil, dass sich die Korrossion eines vorhandenen Glaskontaktmaterials verschlechtert. Eine Unterschreitung des jeweiligen Alkalioxid-Gehalts hat den Nachteil, dass die Einschmelzbarkeit verschlechtert wird.

Die Summe Li₂O+ Na₂O+ K₂O liegt im Bereich >10 bis 19 Gew.-%, bevorzugter im Bereich >12 bis 19 Gew.-%.

Als Erdalkalioxide finden insbesondere Calcium, Magnesium, Barium und in untergeordnetem Maße auch Strontium Verwendung.

CaO wird im Bereich von 5 bis < 12 Gew.-%, bevorzugt 6 bis < 12 Gew.-%, bevorzugter 7 bis < 12 Gew.-%, insbesondere bevorzugt 8 bis < 12 Gew.-% eingesetzt. MgO wird im Bereich von 0 bis 6 Gew.-%, bevorzugt 0 bis 5 Gew.-%, bevorzugter 0,1 bis 3 Gew.-%, insbesondere bevorzugt 0,5 bis 2 Gew.-% eingesetzt. MgO kann zur Verbesserung der Kristallisationsstabilität und Erhöhung der Transformationstemperatur Tg eingesetzt werden. MgO kann in der erfindungsgemäßen Glaszusammensetzung aber auch gänzlich weggelassen werden (MgO = 0 Gew.-%).
BaO wird im Bereich von 0 bis 12 Gew.-%, bevorzugt >1 bis 12 Gew.-%, bevorzugter >1 bis 10 Gew.-%, noch bevorzugter 1,5 bis 9 Gew.-%, insbesondere bevorzugt 1,5 bis < 3,5 Gew.-% eingesetzt. Der Zusatz von BaO kann zur Erhöhung der Transformationstemperatur Tg der Glaszusammensetzung herangezogen werden. Die Vorteile eines geringen BaO-Gehalts sind im Wesentlichen die geringere Dichte und damit Gewichtsreduktion des Glases sowie die Kostenersparnis der teueren Komponente an sich. Die geringe Dichte ist besonders beim Transport des Glases zum Weiterverarbeiter von Vorteil, insbesondere wenn die aus dem Glas hergestellten Produkte, wie Lampen, in portable Geräte eingebaut werden. Die Gewichtsreduzierung des Glases beträgt bevorzugt >2% (bei einem Gehalt von BaO im Bereich von 3 bis <4 Gew.-%) besonders bevorzugt >5% (bei einem Gehalt von BaO im Bereich von 2 bis 3 Gew.-%). Ein weiterer Vorteil eines BaO-armen Glas ist ebenfalls, dass Barium-Ionen, die beispielsweise in Form von löslichen Barium-Verbindungen, als toxisch eingestuft werden, reduziert oder gänzlich weggelassen werden können. Durch Verringern der Komponente BaO resultiert weiterhin ein deutlicher Kostenvorteil, da BaO relativ teuer ist, was sich bei der großtechnische Herstellung von Glas summiert.

In überraschender Weise hat sich aber nun gezeigt, dass die zuvor geschilderten Vorteile für das erfindungsgemäße Glas nur von untergeordneter Bedeutung sind, da ein Zusatz bereits von relativ kleinen Mengen an Bariumoxid, beispielsweise > 1 Gew.-%, zu einer unerwarteten Erhöhung der Kristallisationsstabilität der Glaszusammensetzung beitragen, was die großtechnische Herstellung erleichtert. Der Gesamtgehalt an BaO beträgt dabei bevorzugt > 1 bis 12 Gew.-%, bevorzugter > 1,5 bis 12 Gew.-%, um eine verbesserte Kristallisationsstabilität zu gewährleisten. Ein Weglassen von BaO führt zu Nachteilen beim Kristallisationsverhalten, so dass in der Regel keine ausreichende Entglasungsstabilität erhalten werden kann.

Völlig überraschend wurde zudem festgestellt, dass sich ein Zusatz von BaO in keiner Weise negativ auf die Diffusion der Natriumionen auswirkt. Dies steht in Gegensatz zu den Ausführungen in der US 2005/0003136 A1, wonach sich Bariumoxid auf die Natriumdiffusion nachteilig auswirken soll. Vielmehr wurde keinerlei Beeinträchtigung der Effektivität, beispielsweise einer CIGS-Zelle, bei Verwendung des erfindungsgemäßen Glases in Form eines Substratglas mit einem BaO-Gehalt > 1 Gew.-% beobachtet.

Als besonders vorteilhaft hat es sich erwiesen, wenn zusätzlich zu einem SiO₂-Gehalt im Bereich von 49 bis 58,5 Gew.-%, der BaO-Gehalt im Bereich von 1,5 bis 12 Gew.-% eingestellt wurde. Hierdurch wird die Tendenz des Glases zur Kristallisation deutlich gemindert, so dass die Gefahr der Entglasung gesenkt und damit Kristallisationseffekte weitestgehend vermieden werden.
SrO liegt im erfindungsgemäßen Glas im Bereich von 0 bis 5 Gew.-%, bevorzugt 0 bis <2,5 Gew.-%, insbesondere im Bereich von 0 bis < 0,5 Gew.-% vor. SrO dient im Allgemeinen zu Erhöhung der Transformationstemperatur Tg des Glases. SrO kann in der erfindungsgemäßen Glaszusammensetzung auch wegfallen (SrO = 0 Gew.-%). Besondere nachteilige Effekte, wie im Stand der Technik behauptet, konnten hierdurch nicht festgestellt werden. Es kann jedoch vorteilhaft sein, dass SrO zur Verbesserung der Kristallisationsstabilität vorhanden ist, und zwar vorzugsweise mit wenigstens 0,1 Gew.-%.
Die Summe aus MgO+CaO+SrO+BaO liegt erfindungsgemäß im Bereich von 5 bis 19 Gew.-%, bevorzugt im Bereich von 7 bis 19 Gew.-%, bevorzugter im Bereich von 8,2 bis 19 Gew.-%.

B₂O₃ ist erfindungsgemäß in einer Menge von 0 bis 2 Gew.-%, bevorzugter 0 bis 1 Gew.-%, ganz besonders bevorzugt 0 - 0,5 Gew.-%, vorhanden. Gemäß einer besonders bevorzugten Ausführungsform ist das Glas frei von B₂O₃. Dies ist bevorzugt, da B₂O₃ einerseits toxikologisch bedenklich ist (teratogen bzw. fruchtschädigend) und andererseits eine teuere Komponente ist, die den Gemengepreis signifikant erhöht. Höhere Anteile von B₂O₃ haben zudem den Nachteil, dass sie während der Glasschmelze verdampfen, sich im Abgasbereich störend niederschlagen und die Glaszusammensetzung an sich verändern. Weiterhin ist der Zusatz von B₂O₃ bei speziellen Anwendungen nachteilig. So hat sich gezeigt, dass sich ein B₂O₃-Gehalt über 1 Gew.-% in einem Substratglas nachteilig auf den Wirkungsgrad einer Dünnschichtsolarzelle auswirkt, da Boratome aus dem Substratglas über Abdampfen oder Diffusion in die Halbleiterschichten gelangen, wo diese wahrscheinlich Defekte bewirken, die elektrisch aktiv sind und durch erhöhte Rekombination die Leistung der Zelle herabsetzen können.

Weiterhin ist ZrO₂ in einer Menge von > 0,5 bis 9 Gew.-%, bevorzugt > 1 bis 9 Gew.-%, insbesondere > 4 bis 9 Gew.-% enthalten.

Darüber hinaus können auch andere Komponenten, wie beispielsweise WO₃, MoO₃, Bi₂O₃, CeO₂, TiO₂, Fe₂O₃, ZnO, F und/oder Cs₂O oder auch weitere Komponenten, unabhängig voneinander vorhanden sein.

WO₃, MoO₃, Bi₂O₃ liegen in den erfindungsgemäßen Alumosilikatgläsern unabhängig voneinander jeweils in einer Menge von 0 bis 3 Gew.-% vor. Diese Komponenten dienen vorzugsweise zur Einstellung der UV-Kante des Glases und können auch als Redox-Puffer zur Läuterung Verwendung finden.

TiO₂ und auch CeO₂ können üblicherweise zur UV-Blockung des Glases zugegeben werden. Je nach Anwendungsgebiet kann das erfindungsgemäße Glas z.B. in Form eines Deckglases/Hüllrohrs vorliegen und eine Dotierung mit beispielsweise TiO₂ und/oder CeO₂ aufweisen, um schädliche UV-Strahlung von unterhalb des Glases liegenden Bauteilen fernzuhalten. Der TiO₂-Gehalt liegt erfindungsgemäß im Bereich von 0 bis 10 Gew.-%, bevorzugt im Bereich von 0,1 bis 10 Gew.-%, bevorzugter im Bereich von 0,1 bis 5 Gew.-%. Jedoch ist ein Gehalt von 0,1 bis 2 Gew.-%, insbesondere > 0,1 bis 2 Gew.-% besonders bevorzugt, da dann auf toxische Läutermittel, wie As₂O₃ und Sb₂O₃ gänzlich verzichtet werden kann. CeO₂ liegt erfindungsgemäß in einem Bereich von 0 bis 3 Gew.-%.

Fe₂O₃ findet in einer Menge von 0 bis 0,5 Gew.-% Verwendung und dient üblicherweise zur Einstellung der UV-Blockung, kann aber auch als Redox-Puffer für die Läuterung eingesetzt werden.

Weiterhin kann dem Glas der Erfindung zur Verbesserung der Schmelzbarkeit Fluor in Form von Fluoridsalzen, wie z.B. NaF, zugesetzt werden. Die Menge, die in der Glaszusammensetzung eingesetzt wird, beträgt von 0 bis 3 Gew.-%.

Die erfindungsgemäßen Alumosilicatgläser sollen bis auf unvermeidbare Verunreinigungen frei von Nioboxid sein.

Überraschenderweise wurde gefunden, dass einzelne Komponenten der erfindungsgemäßen Glaszusammensetzung, die in weiten Teilen des Standes der Technik als wesentlich beschrieben wurden, deutlich verringert oder sogar völlig weggelassen werden können. Dies sind die Komponenten B₂O₃, Li₂O und SrO. Trotz des Fehlens von B₂O₃, Li₂O und SrO können in unerwarteter Weise die gewünschten Eigenschaften des erfindungsgemäßen Alumosilikatglases als verbesserte Alternative für ein Kalk-Natron-Glas bereitgestellt werden.

Es können übliche Läutermittel zum Einsatz kommen, sofern diese die chemischen und physikalischen Eigenschaften der erfindungsgemäßen Glaszusammensetzung nicht nachteilig beeinflussen. Beispielsweise ist eine Läuterung mit Sulfaten, Chloriden, Sb₂O₃, As₂O₃ und/oder SnO₂ möglich. Die Läutermittel sind bevorzugt jeweils für sich im Glas in einer Menge von > 0 - 1 Gew.-% enthalten, wobei der Mindestgehalt vorzugsweise 0,1, insbesondere 0,2 Gew.-% beträgt.

Verfahren zur Herstellung von SiO₂-haltigen Gläsern sind bekannt. Die geeigneten Rohstoffmaterialien und Verfahrensbedingungen bei der Herstellung von Glas, wie die Atmosphäre im Schmelzofen, die Schmelzdauer und die Schmelztemperatur, können vom Fachmann im Stand der Technik ohne weiteres ausgewählt und eingestellt werden.

Das Glas kann in jeder beliebigen Form hergestellt werden, z.B. als Flachglas, Rohrglas, Blockglas, Faserglas, Stabglas, beispielsweise rund, oval, strukturiert oder nicht.

Die beschriebenen Gläser eignen sich beispielsweise zur Herstellung von Flachglas, besonders nach dem Float-Verfahren. Außerdem eignen sich die Gläser zur Herstellung von Röhrenglas, wobei das Danner-Verfahren besonders bevorzugt ist. Jedoch ist die Herstellung von Rohrglas auch nach dem Vello- bzw. A-Zug Verfahren möglich. Es können auch Glasröhren hergestellt werden, die beispielsweise einen Durchmesser von mindestens 0,5 mm, insbesondere mindestens 1 mm und einer Obergrenze von höchstens 3 cm, insbesondere höchstens 1 cm aufweisen. Besonders bevorzugte Röhrendurchmesser betragen zwischen 2 mm und 5 mm. Es hat sich gezeigt, dass derartige Röhren eine Wandstärke von mindestens 0,05 mm, insbesondere mindestens 0,1 mm aufweisen, wobei mindestens 0,2 mm besonders bevorzugt sind. Maximale Wandstärken betragen höchstens 1 mm, wobei Wandstärken von höchstens < 0,8 mm bzw. < 0,7 mm bevorzugt sind.

Gegenstand der Erfindung ist auch die Verwendung der erfindungsgemäßen Alumosilikatgläser. Bevorzugte Anwendungsgebiete liegen im Bereich der Elektroindustrie, z.B. bei Glas-Metall-Verschmelzungen, im Halbleiterbereich, z.B. als Substratgläser für Displayanwendungen, oder in der Solartechnologie als Substratgläser für Solaranwendungen aller Art.

Ein wichtiges Anwendungsfeld der erfindungsgemäßen Gläser liegt beispielsweise im Bereich der Verschmelzung von Gläsern an Metalle und Legierungen, die eine relativ hohe thermischen Dehnung im Bereich 8 bis 10 x 10⁻⁶/K aufweisen und bei deren Anwendung eine höhere thermische Belastbarkeit gefordert ist, als dies mit herkömmlichen Kalk-Natron-Gläsern realisiert werden kann. Dies sind z.B. Anwendungen in der Lampenindustrie, wo thermisch belastbarere Elektrodendurchführungen benötigt werden. Insbesondere sind die erfindungsgemäßen Gläser daher bei Verwendung von sogenannten Dumet-Legierungen mit hohen thermischen Dehnungen im Bereich 8 bis 10 x 10⁻⁶/K einsetzbar.

Besonders in Frage kommende Verwendungen sind zum Beispiel im Bereich der Gasentladungslampen, insbesondere Fluoreszenzlampen, wie CCFL, HCFL und dergleichen, in Bereichen wie beispielsweise Hintergrundbeleuchtungen für TFT-Displays oder auch bei unterschiedlichsten Beleuchtungsanforderungen ("General Lighting"), bei denen kostengünstigere Elektrodendurchführungen, wie Dumet-Legierungen, im Vergleich zu teuren Elektrodendurchführungen, z. B. Wolfram-Durchführungen, mit einer niedrigen Dehnung von etwa 3 bis 5 x 10⁻⁶/K, zum Einsatz kommen sollen.

Ein weiteres interessantes Einsatzgebiet für die erfindungsgemäßen Gläser liegt im Bereich der Displays, beispielsweise für PDPs, insbesondere als Substratgläser. In materialtechnischer Hinsicht sind die Anforderungen an Substratgläser für PDPs derart, dass neben einer erforderlichen Transparenz die Anpassung an das Ausdehnungsverhalten der am meisten verwendeten Fluoreszenzfarbstoffe wesentlich ist. Daher sollte die thermische Dehnung alpha20/300 des Glases im Bereich herkömmlicher Fenstergläser, also bei 8 bis 9 x 10⁻⁶/K liegen. Diese Voraussetzung wird von den erfindungsgemäßen Gläser erfüllt.

Weiterhin sind die erfindungsgemäßen Gläser besonders für derartige elektronischen Anwendungen geeignet, bei denen es auf hohe Temperaturbelastbarkeit der Gläser ankommt. Hierdurch werden die Anwendungsmöglichkeiten der Gläser deutlich erhöht.

Ferner sind die erfindungsgemäßen Gläser insbesondere für Solaranwendungen geeignet, besonders für solche Anwendungen, bei denen ein Glas mit einer hohen thermischen Dehnung und relativ hohen Temperaturstabilität (Prozessstabilitat) gefordert ist, die Heissformgebung des Glases jedoch bei möglichst niedrigen Temperaturen erfolgen soll (ein sog. "kurzes Glas"). Die Verarbeitungstemperatur (VA) des Glases soll dabei möglichst niedrig liegen, um eine kostengünstige Herstellung dieser Gläser zu ermöglichen. Die Verarbeitungstemperatur (VA) ist in vorliegender Anmeldung diejenige Temperatur, bei der das Glas eine Viskosität n von η= 10⁴ dPas aufweist. Je nach Glaszusammensetzung kann die Verarbeitungstemperatur VA, bei der eine Viskosität η = 10⁴ dPas erreicht wird, unterschiedlich sein. Die erfindungsgemäßen Gläser erfüllen diese Anforderungen in hohem Maße und sind daher für derartige Anwendungen besonders gut geeignet.

Die erfindungsgemäßen Glas sind insbesondere als Substratglas/Superstratglas oder auch als Deckglas im Bereich der Halbleitertechnologie geeignet, insbesondere für die Dünnschicht-Photovoltaik, umfassend Schichten, enthaltend Cadmium und/oder Tellur in metallischer und/oder oxidischer Form oder enthaltend Kupfer, Indium, Gallium, Schwefel und/oder Selen in metallischer und/oder oxidischer Form. Superstrate sind Substratgläser, wobei das Substratglas quasi auch als Deckglas fungiert, da bei Dünnschicht-Photovoltaik das beschichtete Glas "umgedreht" wird und die Schicht auf der Unterseite liegt und das Licht durch das Substratglas auf die Photovoltaik-Schicht trifft.

Besonders geeignet sind die Gläser der Erfindung daher für Technologien auf Basis von Cd-Te, die verschiedenen Dünnschicht-Silizium-Technologien, wie a-Si, amorph-kristallines und auch reinkristallines Silizium, sowie Technologien, die auf Kupfer-Indium-Gallium-Sulfid-Selenid, sog. CIS oder CIGS, basieren. CIGS steht für Cu(In₁₋ₓ,Gaₓ)(S_{1-y},Se_{y})₂ und ist eine bekannte Dünnschichttechnologie für Solarzellen und steht als Abkürzung für die verwendeten Elemente Kupfer, Indium, Gallium, Schwefel und Selen (engl. copper, indium, gallium, sulfur, and selenium). Wichtige Beispiele sind Cu(In,Ga)Se₂ (Kupfer-Indium-Gallium-Diselenid) oder CuInS₂ (Kupfer-Indium-Disulfid). Diese Materialien zeichnen sich insbesondere dadurch aus, dass sie als direkte Halbleiter bereits in einer relativ dünnen Schicht von wenigen µm das Sonnenlicht effektiv absorbieren. Die Abscheidung derart dünner photoaktiver Schichten erfordert hohe Prozesstemperaturen, um hohe Wirkungsgrade zu erzielen. Typische Temperaturen liegen im Bereich von 450 bis 600°C, wobei die maximale Temperatur durch das Substrat begrenzt wird. Für großflächige Anwendungen wird als Substrat bekanntermaßen häufig Glas verwendet. Damit der Wärmeausdehnungskoeffizient (CTE) an die Halbleiterschichten angepasst ist, wird bislang beispielsweise gefloatetes Kalk-Natron-Glas als Substrat eingesetzt, wie zum Beispiel in der DE 43 33 407 und der WO 94/07269 offenbart. Kalk-Natron-Glas weist, wie bereits erläutert, eine Transformationstemperatur von etwa 525°C auf und begrenzt damit alle Verarbeitungsprozesse auf etwa 500°C. Ansonsten treten sogenannte Verwölbungen auf und das Glas beginnt sich zu verbiegen. Dies gilt um so mehr je größer das zu beschichtende Substrat ist und je näher sich die Prozesstemperatur der Transformationstemperatur Tg des Glases nähert. Verwölbungen und Verbiegungen des Substrats führen insbesondere bei Inline-Prozessen oder - Anlagen zu Problemen, wodurch der Durchsatz und die Ausbeute dramatisch sinken.

Insbesondere geeignet sind die erfindungsgemäßen Gläser daher auch für Cd-Te- oder für CIS- bzw. CIGS Photovoltaik-Anwendungen, insbesondere als Substratglas und/oder Superstratglas und/oder Deckglas. Hierbei bezeichnet CIS Kupfer-Indium Sulfid und/oder Selenid und CIGS Kupfer-Indium-Gallium Sulfid und/oder Selenid.
Die erfindungsgemäßen Gläser stellen somit insbesondere in diesem Einsatzgebiet eine Alternative zu Kalk-Natron-Gläsern dar und können diese in vorteilhafter Weise ersetzen, da bei der Abscheidung von Halbleiterschichten höhere Verfahrenstemperaturen eingesetzt werden können als bei herkömmlichen Kalk-Natron-Gläsern, ohne dass sich das Substrat in unvorteilhafter Weise verformt. Eine gewünscht höhere Temperatur beim Beschichtungsverfahren führt zudem zu hohen Abscheidungsraten und zu einer sehr guten kristallinen Qualität der erzeugten Schichten.

Damit beim Abkühlen nach dem Aufbringen der Halbleiterschichten kein Abplatzen der Schichten auftritt, ist es sinnvoll, wenn das Substratglas weiterhin an die thermische Wärmeausdehnung des Rückkontaktmaterials der Solarzelle, wie bespielsweise Molybdän (etwa 5 x 10⁻⁶/K), und an die darauf aufgebrachten Halbleiter (z.B. etwa 8,5 x 10⁻⁶/K für CIGS) angepasst ist. Dies trifft ebenfalls auf die erfindungsgemäßen Gläser zu.

Besonders geeignet sind die erfindungsgemäßen Gläser daher für die Solartechnologie, bevorzugt für Solarzellen, insbesondere Dünnschichtsolarzellen, auf Basis von Silicium oder auf Basis von Verbundhalbleitermaterial, wie CdTe, CIS oder CIGS. Insbesondere Verwendung finden die Gläser der Erfindung daher als Dünnschichtsolarzellen-Substrate oder -Superstrate oder -Deckgläser. Hierbei wird wesentlich weniger photoaktives Material für eine effiziente Umwandlung von Sonnenlicht für Elektrizität benötigt, als bei herkömmlichen kristallinen, siliciumbasierten Solarzellen. Der geringe Halbleitermaterialverbrauch und die hohe Automatisierung der Fertigung führen zu deutlichen Kostensenkungen bei dieser Technologie.

Ein weiterer Vorteil bei Verwendung der erfindungsgemäßen Gläser in der Solartechnologie ist deren hoher Gehalt an Natrium. Bekannt ist, dass Natrium in einen Halbleiter eingebaut werden kann und damit den Wirkungsgrad einer Solarzelle durch verbesserten Chalkogen-Einbau in die Kristallstruktur des Halbleiters erhöht. Damit kann das Substratglas neben der Eigenschaft als Träger auch dazu dienen, die gezielte Abgabe von Natriumionen/-atomen in den Halbleiter zu unterstützen.

Die erfindungsgemäßen Gläser sind für die oben genannten Technologien ganz besonders geeignet, da die Prozessierbarkeit/Abscheidung gegenüber den traditionell verwendeten Kalk-Natron-Gläsern aufgrund höherer Temperaturstabilität bei höheren Temperaturen erfolgen kann, was große Vorteile mit sich bringt. Ein Kriterium hierfür ist die sog. Transformationstemperatur Tg. Andererseits sind keine besonders hohen Temperaturen für den Schmelz- und Heissformgebungsprozess des Glases erforderlich, was eine kostengünstige Produktion ermöglicht.

Nachfolgend wird die vorliegende Erfindung anhand von Beispielen erläutert, welche die erfindungsgemäße Lehre veranschaulichen, diese aber nicht beschränken sollen.

### Beispiele

Es wurden erfindungsgemäße Glaszusammensetzungen ausgewählt und hieraus Gläser hergestellt. Zum Schmelzen wurden 4 Liter-Platintiegel eingesetzt, in die die Rohstoffe über 8 Stunden bei einer Schmelztemperatur von 1580°C eingebracht und dort 14 Stunden bei dieser Temperatur gehalten wurde. Unter Rühren wurde dann die Glasschmelze innerhalb von 8 Stunden auf 1400°C abgekühlt und anschließend in auf 500°C vorgeheizte Graphitformen gegossen. Die Gussform wurde nach dem Guss in einen auf 650°C vorgeheizten Kühlofen gebracht, der mit 5°C/Stunde auf Raumtemperatur abgekühlt wurde.

In den nachfolgenden Tabellen 1 und 2 sind die Zusammensetzungen und Eigenschaften der erfindungsgemäßen Gläser zusammengefasst.

**Tabelle 1**

| | | A1 | | A2 | | A3 |
|---|---|---|---|---|---|---|
| SiO₂ | | 58,45 | | 57,90 | | 54,00 |
| B₂O₃ | | | | | | |
| Al₂O₃ | | 10,20 | | 9,90 | | 9,88 |
| Li₂O | | | | | | |
| Na₂O | | 11,50 | | 11,00 | | 11,00 |
| K₂O | | 4,48 | | 4,17 | | 3,05 |
| MgO | | 0,02 | | 1,50 | | |
| CaO | | 8,50 | | 7,00 | | 10,87 |
| BaO | | 1,50 | | 2,00 | | 4,00 |
| ZrO₂ | | 5,35 | | 6,53 | | 7,20 |
| TiO₂ | | | | | | |
| CeO₂ | | | | | | |
| F | | | | | | |
| SO₃ | | | | | | |
| As₂O₃ | | | | | | |
| Summe | | 100,00 | | 100,00 | | 100,00 |
| | | | | | | |
| alpha | | 9,40 | | 8,90 | | 9,11 |
| Tg | | 590 | | 602 | | 611 |
| VA | | 1090 | | 1110 | | 1091 |
| Dichte | | | | | | |
| Na₂O/ (MgO+ CaO+ZrO₂) | | 0,80 | | 0,73 | | 0,61 |
| MgO+CaO+ ZrO₂ | | 14,4 | | 15,0 | | 18,07 |
| Kristallisationsbeständigkeit | | + | | + | | + |

**Tabelle 2**

| | | A4 | | A5 |
|---|---|---|---|---|
| SiO₂ | | 51,50 | | 54,10 |
| B₂O₃ | | | | |
| Al₂O₃ | | 13,00 | | 9,50 |
| Li₂O | | | | |
| Na₂O | | 10,60 | | 12,60 |
| K₂O | | 0,50 | | |
| MgO | | 1,40 | | 1,50 |
| CaO | | 10,50 | | 8,30 |
| BaO | | 11,10 | | 9,00 |
| ZrO₂ | | 1,40 | | 5,00 |
| TiO₂ | | | | |
| CeO₂ | | | | |
| F | | | | |
| SO₃ | | | | |
| As₂O₃ | | | | |
| Summe | | 100,00 | | 100,00 |
| | | | | |
| alpha | | | | |
| Tg | | | | |
| VA | | | | |
| Dichte | | | | |
| Na₂O/ (MgO+ CaO+ZrO₂) | | 0,81 | | 0,86 |
| MgO+CaO+ ZrO₂ | | 13,3 | | 14,8 |
| Kristallisationsbeständigkeit | | + | | + |

| | | | | |
|---|---|---|---|---|
| alpha....thermischer Wärmeausdehnungskoeffizient bei 20 bis 300°C [x 10⁻⁶K⁻¹] Tg......Transformationstemperatur [°C] VA.......Verarbeitungstemperatur, bei der die Viskosität bei 10⁴ dPas liegt [°C] Dichte....[g/cm³] Kristallisationsbeständigkeit: +............gut o............mittel -............schlecht | | | | |

Mit der vorliegenden Erfindung werden somit erstmals Glaszusammensetzungen beschrieben, die eine Alternative zu Kalk-Natron-Gläsern bereitzustellen, welche eine ähnliche thermische Dehnung von etwa 8 bis 10 x 10⁻⁶/K, aber eine höhere thermische Belastbarkeit (Tg) bei gleichzeitig ähnlichen bzw. nur geringfügig erhöhten Verarbeitungstemperaturen (VA) im Vergleich zu Kalk-Natron-Gläsern aufweisen.

## Patentansprüche

1. Alumosilikatglas, **dadurch gekennzeichnet, dass** es eine der folgenden Glaszusammensetzung (in Gew.-% auf Oxidbasis) aufweist:
| | |
|---|---|
| SiO₂ | 49 - 69 Gew.-%, |
| bevorzugt | 49 - < 59 Gew.-%, |
| B₂O₃ | 0 - 2 Gew.-%, |
| bevorzugt B₂O₃ | 0 Gew.-%, |
| Al₂O₃ | >4,7 - 15 Gew.-%, |
| bevorzugt Al₂O₃ | > 5 - 15 Gew.-%, |
| Li₂O | 0 - 4 Gew.-%, |
| bevorzugt Li₂O | 0 - <0,3 Gew.-%, |
| Na₂O | >10 - 18 Gew.-% |
| K₂O | >0 - 8 Gew.-%, |
| bevorzugt K₂O | >0 - <5 Gew.-%, |
| insbesondere K₂O | >0 - <4 Gew.-%, wobei die |
| Summe Li₂O+ Na₂O+ K₂O | >10 - 19 Gew.-% beträgt, und |
| MgO | 0 - 6 Gew.-% |
| CaO | 5 - <12 Gew.-% |
| SrO | 0 Gew.-%, |
| BaO | >1 - 12 Gew.-%, |
| bevorzugter BaO | >1 - <3,5 Gew.-%, |
| wobei die | |
| Summe MgO+CaO+SrO+BaO | 5 - 19 Gew.-% beträgt, und |
| F | 0 - 3 Gew.-% |
| TiO₂ | 0 - 10 Gew.-%, |
| bevorzugt TiO₂ | >0,1 - 10 Gew.-%, |
| Fe₂O₃ | 0 - 0,5 Gew.-% |
| ZrO₂ | >0,5 - 9 Gew.-% |
| CeO₂ | 0 - 3 Gew.-% |
| WO₃ | 0 - 3 Gew.-% |
| Bi₂O₃ | 0 - 3 Gew.-% |
| MoO₃ | 0 - 3 Gew.-%, |
wobei das Glas derart ausgewählt ist, dass der Quotient (Gew.-%) aus Na₂O/(MgO+CaO+ZrO₂) im Bereich von 0,5 bis 0,9 liegt.

2. Alumosilikatglas nach Anspruch 1, **dadurch gekennzeichnet, dass** es einen thermischen Wärmeausdehnungskoeffizienten im Bereich von 8 bis 10 x 10⁻⁶/K im Temperaturbereich von 20 bis 300°C, eine Transformationstemperatur Tg im Bereich von von 580°C bis 640°C sowie eine Verarbeitungstemperatur VA im Bereich von 1065°C bis 1140°C aufweist.

3. Alumosilikatglas nach mindestens einem der vorangehenden Ansprüche 1 oder 2, **dadurch gekennzeichnet, dass** das Glas derart ausgewählt ist, dass der Quotient (Gew.-%) aus Na₂O/(MgO+CaO+ZrO₂) im Bereich von 0,6 bis 0,9, besonders bevorzugt 0,6 bis 0,8 liegt.

4. Alumosilikatglas nach mindestens einem der vorangehenden Ansprüche 1 bis 3, **dadurch gekennzeichnet, dass** die Summe aus MgO+CaO+ZrO₂ im Bereich von 10 bis 20 Gew.-%, bevorzugt im Bereich von 14 bis <19 Gew.-% liegt.

5. Alumosilikatglas nach mindestens einem der vorangehenden Ansprüche 1 bis 4, **dadurch gekennzeichnet, dass** das Alumosilikatglas bis auf unvermeidbare Verunreinigungen kein B₂O₃ und kein Li₂O enthält.

6. Alumosilikatglas nach mindestens einem der vorangehenden Ansprüche 1 bis 5 , **dadurch gekennzeichnet, dass** das Alumosilikatglas eine der folgenden Glaszusammensetzung (in Gew.-% auf Oxidbasis) aufweist:
| | |
|---|---|
| SiO₂ | 49 - 69 Gew.-%, |
| bevorzugt | 49 - 58,5 Gew.-%, |
| B₂O₃ | 0 Gew.-% |
| Al₂O₃ | >4,7 - 14 Gew.-%, |
| bevorzugt Al₂O₃ | > 5 - 14 Gew.-%, |
| Li₂O | 0 - 4 Gew.-%, |
| bevorzugt Li₂O | 0 - <0,3 Gew.-%, |
| Na₂O | >10 - 18 Gew.-% |
| K₂O | >0 - 8 Gew.-%, |
| bevorzugt K₂O | >0 - <5 Gew.-%, |
| insbesondere K₂O | >0 - <4 Gew.-%, wobei die |
| Summe Li₂O+ Na₂O+ K₂O | >10 - 19 Gew.-% beträgt, und |
| MgO | 0 - 5 Gew.-% |
| CaO | 7 - <12 Gew.-% |
| SrO | 0 Gew.-%, |
| BaO | >1 - 10 Gew.-%, |
| bevorzugter BaO | >1 - <3,5 Gew.-%, |
| wobei die | |
| Summe MgO+CaO+SrO+BaO | 7 - 19 Gew.-% beträgt, und |
| F | 0 - 3 Gew.-% |
| TiO₂ | 0 - 5 Gew.-%, |
| bevorzugt TiO₂ | >0,5 - 5 Gew.-% |
| Fe₂O₃ | 0 - 0,5 Gew.-% |
| ZrO₂ | >1 - 9 Gew.-% |
| CeO₂ | 0 - 3 Gew.-% |
| WO₃ | 0 - 3 Gew.-% |
| Bi₂O₃ | 0 - 3 Gew.-% |
| MoO₃ | 0 - 3 Gew.-%. |

7. Alumosilikatglas nach mindestens einem der vorangehenden Ansprüche 1 bis 5 , **dadurch gekennzeichnet, dass** das Alumosilikatglas eine der folgenden Glaszusammensetzung (in Gew.-% auf Oxidbasis) aufweist:
| | |
|---|---|
| SiO₂ | 49 - 66 Gew.-%, |
| bevorzugt | 49 - 58,5 Gew.-%, |
| Al₂O₃ | >4,7 - 14 Gew.-%, |
| bevorzugt Al₂O₃ | > 5 - 14 Gew.-%, |
| Na₂O | >11 - 18 Gew.-% |
| K₂O | >0,5 - 8 Gew.-%, |
| bevorzugt K₂O | >0 - <5 Gew.-%, |
| insbesondere K₂O | >0 - <4 Gew.-%, wobei die |
| Summe Na₂O+ K₂O | >11 - 19 Gew.-% beträgt, und |
| MgO | 0,1 - 3 Gew.-% |
| CaO | 7 - <12 Gew.-% |
| BaO | >1 - 9 Gew.-%, |
| bevorzugt BaO | 1,5 - <3,5 Gew.-%, wobei die |
| Summe MgO+CaO+BaO | 8,2 - 19 Gew.-% beträgt, und |
| F | 0 - 3 Gew.-% |
| TiO₂ | 0 - 5 Gew.-%, |
| bevorzugt TiO₂ | >0,5 - 5 Gew.-% |
| Fe₂O₃ | 0 - 0,5 Gew.-% |
| ZrO₂ | >1 - 9 Gew.-% |
| CeO₂ | 0 - 3 Gew.-% |
| WO₃ | 0 - 3 Gew.-% |
| Bi₂O₃ | 0 - 3 Gew.-% |
| MoO₃ | 0 - 3 Gew.-%, |
wobei das Glas kein B₂O₃, kein Li₂O und kein SrO enthält.

8. Alumosilikatglas nach mindestens einem der vorangehenden Ansprüche 1 bis 7 , **dadurch gekennzeichnet, dass** das Alumosilikatglas übliche Läutermittel, wie z.B. Sulfate, Chloride, Sb₂O₃, As₂O₃, SnO₂ aufweist.

9. Verwendung eines Alumosilikatglases nach einem der vorangehenden Ansprüche 1 bis 8 , bei elektronischen Anwendungen, bei denen eine hohe Temperaturbelastbarkeit der Gläser erforderlich ist.

10. Verwendung eines Alumosilikatglases nach einem der vorangehenden Ansprüche 1 bis 8 für Verschmelzungen mit Metallen und Legierungen, wobei die Metalle oder Legierungen einen thermischen Wärmeausdehnungskoeffizienten im Bereich 8 bis 10 x 10⁻⁶/K aufweisen, für Gasentladungslampen, insbesondere Fluoreszenzlampen, bevorzugt im Bereich der Hintergrundbeleuchtungen von TFT-Displays und Beleuchtungen ("General Lighting").

11. Verwendung eines Alumosilikatglases nach einem der vorangehenden Ansprüche 1 bis 8 im Bereich der Halbleitertechnologie als Substratglas, Superstratglas und/oder Deckglas, wobei Schichten, enthaltend Cadmium und/oder Tellur in metallischer und/oder oxidischer Form oder enthaltend Kupfer, Indium, Gallium, Schwefel und/oder Selen in metallischer und/oder oxidischer Form, vorliegen.

12. Verwendung eines Alumosilikatglases nach einem der vorangehenden Ansprüche 1 bis 8 in der Solartechnologie, bevorzugt für Solarzellen, insbesondere Dünnschichtsolarzellen als Substratglas, Superstratglas und/oder Deckglas.

13. Verwendung eines Alumosilikatglases nach einem der vorangehenden Ansprüche 1 bis 8 für Cd-Te- oder für CIS- bzw. CIGS-Photovoltaik-Anwendungen, insbesondere Dünnschicht-Photovoltaik-Anwendungen, als Substratglas, Superstratglas und/oder Deckglas.

## Claims

1. Aluminosilicate glass, **characterized in that** it has one of the following glass compositions (in oxide-based % by weight):
| | |
|---|---|
| SiO₂ | 49 - 69% by weight |
| preferably | 49 - <59% by weight |
| B₂O₃ | 0 - 2% by weight |
| preferably B₂O₃ | 0% by weight |
| Al₂O₃ | >4.7 - 15% by weight |
| preferably Al₂O₃ | >5 - 15% by weight |
| LiO₂ | 0 - 4% by weight |
| preferably LiO₂ | 0 - <0.3% by weight |
| Na₂O | >10 - 18% by weight |
| K₂O | >0 - 8% by weight |
| preferably K₂O | >0 - <5% by weight |
| especially K₂O | >0 - <4% by weight, wherein the |
| sum total of Li₂O + Na₂O + K₂O is | >10 - 19% by weight, and |
| MgO | 0 - 6% by weight |
| CaO | 5 - <12% by weight |
| SrO | 0% by weight |
| BaO | >1 - 12% by weight |
| preferably BaO | >1 - <3.5% by weight, |
| wherein the | |
| sum total of MgO + CaO + SrO + BaO is | 5 - 19% by weight, and |
| F | 0 - 3% by weight |
| TiO₂ | 0 - 10% by weight |
| preferably TiO₂ | >0.1 - 10% by weight |
| Fe₂O₃ | 0 - 0.5% by weight |
| ZrO₂ | >0.5 - 9% by weight |
| CeO₂ | 0 - 3% by weight |
| WO₃ | 0 - 3% by weight |
| Bi₂O₃ | 0 - 3% by weight |
| MoO₃ | 0 - 3% by weight, |
wherein the glass is chosen in such a way that the quotient (% by weight) of Na₂O/(MgO+CaO+ZrO₂) lies in the range of 0.5 to 0.9.

2. An aluminosilicate glass according to claim 1, **characterized in that** it has a coefficient of thermal expansion in the range of 8 to 10 x 10⁻⁶/K in the temperature range of 20 to 300°C, a transformation temperature Tg in the range of 580°C to 640°C, and a processing temperature VA in the range of 1065°C to 1140°C.

3. An aluminosilicate glass according to one of the preceding claims 1 or 2, **characterized in that** the glass is chosen in such a way that the quotient (% by weight) of Na₂O/(MgO+CaO+ZrO₂) lies in the range of 0.6 to 0.9, especially preferably 0.6 to 0.8.

4. An aluminosilicate glass according to at least one of the preceding claims 1 to 3, **characterized in that** the sum total of MgO+CaO+ZrO₂ lies in the range of 10 to 20% by weight, preferably in the range of 14 to <19% by weight.

5. An aluminosilicate glass according to at least one of the preceding claims 1 to 4, **characterized in that** the aluminosilicate glass does not contain any B₂O₃ and Li₂O apart from the unavoidable impurities.

6. An aluminosilicate glass according to at least one of the preceding claims 1 to 5, **characterized in that** the aluminosilicate glass has one of the following glass compositions (in oxide-based % by weight):
| | |
|---|---|
| SiO₂ | 49 - 69% by weight |
| preferably | 49 - 58.5% by weight |
| B₂O₃ | 0% by weight |
| Al₂O₃ | >4.7 - 14% by weight |
| preferably Al₂O₃ | >5 - 14% by weight |
| LiO₂ | 0 - 4% by weight |
| preferably LiO₂ | 0 - <0.3% by weight |
| Na₂O | >10 - 18% by weight |
| K₂O | >0 - 8% by weight |
| preferably K₂O | >0 - <5% by weight |
| especially K₂O | >0 - <4% by weight, wherein the |
| sum total of Li₂O + Na₂O + K₂O is | >10 - 19% by weight, and |
| MgO | 0 - 5% by weight |
| CaO | 7 - <12% by weight |
| SrO | 0% by weight |
| BaO | >1 - 10% by weight |
| preferably BaO | >1 - <3.5% by weight, |
| wherein the | |
| sum total of MgO + CaO + SrO + BaO is | 7 - 19% by weight, and |
| F | 0 - 3% by weight |
| TiO₂ | 0 - 5% by weight |
| preferably TiO₂ | >0.5 - 5% by weight |
| Fe₂O₃ | 0 - 0.5% by weight |
| ZrO₂ | >1 - 9% by weight |
| CeO₂ | 0 - 3% by weight |
| WO₃ | 0 - 3% by weight |
| Bi₂O₃ | 0 - 3% by weight |
| MoO₃ | 0 - 3% by weight. |

7. An aluminosilicate glass according to at least one of the preceding claims 1 to 5, **characterized in that** the aluminosilicate glass has one of the following glass compositions (in oxide-based % by weight):
| | |
|---|---|
| SiO₂ | 49 - 66% by weight |
| preferably | 49 - <58.5% by weight |
| Al₂O₃ | >4.7 - 14% by weight |
| preferably Al₂O₃ | >5 - 14% by weight |
| Na₂O | >11 - 18% by weight |
| K₂O | >0.5 - 8% by weight |
| preferably K₂O | >0 - <5% by weight |
| especially K₂O | >0 - <4% by weight, wherein the |
| sum total of Na₂O + K₂O is | >11 - 19% by weight, and |
| MgO | 0.1 - 3% by weight |
| CaO | 7 - <12% by weight |
| BaO | >1 - 9% by weight |
| preferably BaO | 1.5 - <3.5% by weight, wherein |
| the sum total of MgO + CaO + BaO is | 8.2 - 19% by weight, and |
| F | 0 - 3% by weight |
| TiO₂ | 0 - 5% by weight |
| preferably TiO₂ | >0.5 - 5% by weight |
| Fe₂O₃ | 0 - 0.5% by weight |
| ZrO₂ | >1 - 9% by weight |
| CeO₂ | 0 - 3% by weight |
| WO₃ | 0 - 3% by weight |
| Bi₂O₃ | 0 - 3% by weight |
| MoO₃ | 0 - 3% by weight |
wherein the glass does not contain any B₂O₃, Li₂O and SrO.

8. An aluminosilicate glass according to at least one of the preceding claims 1 to 7, **characterized in that** the aluminosilicate glass comprises conventional glass-refining agents such as sulphates, chlorides, Sb₂O₃, As₂O₃, SnO₂.

9. The use of an aluminosilicate glass according to one of the preceding claims 1 to 8, in electronic applications in which a high temperature resistance of the glasses is required.

10. The use of an aluminosilicate glass according to one of the preceding claims 1 to 8 for fusions with metals and alloys, wherein the metals or alloys have a coefficient of thermal expansion in the range of 8 to 10 x 10⁻⁶/K, for gas-discharge lamps, especially fluorescent lamps, preferably in the region of background lighting of TFT displays and illuminations (general lighting).

11. The use of an aluminosilicate glass according to one of the preceding claims 1 to 8 in the area of semiconductor technology as a substrate glass, supersubstrate glass and/or cover glass, wherein layers are present which contain cadmium and/or tellurium in metallic and/or oxidic form, or contain copper, indium, gallium, sulphur and/or selenium in metallic and/or oxidic form.

12. The use of an aluminosilicate glass according to one of the preceding claims 1 to 8 in solar technology, preferably for solar cells, especially thin-layer solar cells, as substrate glass, supersubstrate glass and/or cover glass.

13. The use of an aluminosilicate glass according to one of the preceding claims 1 to 8 for Cd-Te or CIS or CIGS photovoltaic applications, especially thin-layer photovoltaic applications, as substrate glass, supersubstrate glass and/or cover glass.

## Revendications

1. Verre aluminosilicate, **caractérisé en ce qu'**il présente l'une des compositions de verre suivantes (en % en poids sur la base des oxydes) :
| | |
|---|---|
| SiO₂ | 49 à 69 % en poids, |
| de préférence | 49 à < 59 % en poids, |
| B₂O₃ | 0 à 2 % en poids, |
| de préférence B₂O₃ | 0 % en poids, |
| Al₂O₃ | > 4,7 à 15 % en poids, |
| de préférence Al₂O₃ | > 5 à 15 % en poids, |
| Li₂O | 0 à 4 % en poids, |
| de préférence Li₂O | 0 à < 0,3 % en poids, |
| Na₂O | > 10 à 18 % en poids, |
| K₂O | > 0 à 8 % en poids, |
| de préférence K₂O | > 0 à < 5 % en poids, |
| en particulier K₂O | > 0 à < 4 % en poids, |
| la somme Li₂O+ Na₂O+ K₂O représentant | > 10 à 19 % en poids, et |
| MgO | 0 à 6 % en poids, |
| CaO | 5 à < 12 % en poids, |
| SrO | 0 % en poids, |
| BaO | > 1 à 12 % en poids, |
| de préférence BaO | > 1 à < 3,5 % en poids, |
| la somme MgO+CaO+SrO+BaO représentant | 5 à 19 % en poids, et |
| F | 0 à 3 % en poids, |
| TiO₂ | 0 à 10 % en poids, |
| de préférence TiO₂ | > 0,1 à 10 % en poids, |
| Fe₂O₃ | 0 à 0,5 % en poids, |
| ZrO₂ | > 0,5 à 9 % en poids, |
| CeO₂ | 0 à 3 % en poids, |
| WO₃ | 0 à 3 % en poids, |
| Bi₂O₃ | 0 à 3 % en poids, |
| MoO₃ | 0 à 3 % en poids, |
le verre étant choisi de telle façon que le quotient (% en poids) de Na₂O/(MgO+CaO+ZrO₂) soit compris entre 0,5 et 0,9.

2. Verre aluminosilicate selon la revendication 1, **caractérisé en ce qu'**il présente un coefficient de dilatation thermique compris entre 8 et 10 × 10⁻⁶/K dans la plage de température de 20 à 300°C, une température de transformation Tg comprise entre 580°C et 640°C et une température de mise en oeuvre VA comprise entre 1065°C et 1140°C.

3. Verre aluminosilicate selon l'une au moins des revendications 1 ou 2, **caractérisé en ce que** le verre est choisi de telle façon que le quotient (% en poids) de Na₂O/(MgO+CaO+ZrO₂) soit compris entre 0,6 et 0,9, de préférence entre 0,6 et 0,8.

4. Verre aluminosilicate selon l'une au moins des revendications 1 à 3, **caractérisé en ce que** la somme de MgO+CaO+ZrO₂ est comprise entre 10 et 20 % en poids, de préférence entre 14 et < 19 % en poids.

5. Verre aluminosilicate selon l'une au moins des revendications 1 à 4, **caractérisé en ce que** le verre aluminosilicate ne contient pas de B₂O₃ et pas de Li₂O en dehors des impuretés inévitables.

6. Verre aluminosilicate selon l'une au moins des revendications 1 à 5, caractérisé qu'il présente l'une des compositions de verre suivantes (en % en poids sur la base des oxydes) :
| | |
|---|---|
| SiO₂ | 49 à 69 % en poids, |
| de préférence | 49 à 58,5 % en poids, |
| B₂O₃ | 0 % en poids, |
| Al₂O₃ | > 4,7 à 14 % en poids, |
| de préférence Al₂O₃ | > 5 à 14 % en poids, |
| Li₂O | 0 à 4 % en poids, |
| de préférence Li₂O | 0 à < 0,3 % en poids, |
| Na₂O | > 10 à 18 % en poids, |
| K₂O | > 0 à 8 % en poids, |
| de préférence K₂O | > 0 à < 5 % en poids, |
| en particulier K₂O | > 0 à < 4 % en poids, |
| la somme Li₂O+ Na₂O+ K₂O représentant | > 10 à 19 % en poids, et |
| MgO | 0 à 5 % en poids, |
| CaO | 7 à < 12 % en poids, |
| SrO | 0 % en poids, |
| BaO | > 1 à 10 % en poids, |
| de préférence BaO | > 1 à < 3,5 % en poids, |
| la somme MgO+CaO+SrO+BaO représentant | 7 à 19 % en poids, et |
| F | 0 à 3 % en poids, |
| TiO₂ | 0 à 5 % en poids, |
| de préférence TiO₂ | > 0,5 à 5 % en poids, |
| Fe₂O₃ | 0 à 0,5 % en poids, |
| ZrO₂ | > 1 à 9 % en poids, |
| CeO₂ | 0 à 3 % en poids, |
| WO₃ | 0 à 3 % en poids, |
| Bi₂O₃ | 0 à 3 % en poids, |
| MoO₃ | 0 à 3 % en poids. |

7. Verre aluminosilicate selon l'une au moins des revendications 1 à 5, caractérisé qu'il présente l'une des compositions de verre suivantes (en % en poids sur la base des oxydes) :
| | |
|---|---|
| SiO₂ | 49 à 66 % en poids, |
| de préférence | 49 à 58,5 % en poids, |
| Al₂O₃ | > 4,7 à 14 % en poids, |
| de préférence Al₂O₃ | > 5 à 14 % en poids, |
| Na₂O | > 11 à 18 % en poids, |
| K₂O | > 0,5 à 8 % en poids, |
| de préférence K₂O | > 0 à < 5 % en poids, |
| en particulier K₂O | > 0 à < 4 % en poids, |
| la somme Na₂O+ K₂O représentant | > 11 à 19 % en poids, et |
| MgO | 0,1 à 3 % en poids, |
| CaO | 7 à < 12 % en poids, |
| BaO | > 1 à 9 % en poids, |
| de préférence BaO | 1,5 à < 3,5 % en poids, |
| la somme MgO+CaO+SrO+BaO représentant | 8,2 à 19 % en poids, et |
| F | 0 à 3 % en poids, |
| TiO₂ | 0 à 5 % en poids, |
| de préférence TiO₂ | > 0,5 à 5 % en poids, |
| Fe₂O₃ | 0 à 0,5 % en poids, |
| ZrO₂ | > 1 à 9 % en poids, |
| CeO₂ | 0 à 3 % en poids, |
| WO₃ | 0 à 3 % en poids, |
| Bi₂O₃ | 0 à 3 % en poids, |
| Mo₀₃ | 0 à 3 % en poids, |
le verre ne contenant pas de B₂O₃, pas de Li₂O et pas de SrO.

8. Verre aluminosilicate selon l'une au moins des revendications 1 à 7, **caractérisé en ce que** le verre aluminosilicate contient les agents d'affinage habituels, par exemple des sulfates, des chlorures, Sb₂O₃, As₂O₃, SnO₂.

9. Utilisation d'un verre aluminosilicate selon l'une des revendications 1 à 8 dans des applications électroniques dans lesquelles les verres doivent avoir une grande résistance thermique.

10. Utilisation d'un verre aluminosilicate selon l'une des revendications 1 à 8 pour des fusions avec des métaux et des alliages, les métaux ou alliages ayant un coefficient de dilatation thermique compris entre 8 et 10 × 10⁻⁶/K, pour des lampes à décharge de gaz, en particulier des lampes à fluorescence, de préférence dans le domaine du rétroéclairage d'écrans TFT et de luminaires d'éclairage « général ».

11. Utilisation d'un verre aluminosilicate selon l'une des revendications 1 à 8 dans le domaine de la technologie des semi-conducteurs en tant que verre de substrat, verre de superstrat et/ou verre de couverture, dans laquelle des couches contenant du cadmium et/ou du tellure sous forme de métal et/ou d'oxyde ou contenant du cuivre, de l'indium, du gallium, du soufre et/ou du sélénium sous forme de métal et/ou d'oxyde sont présentes.

12. Utilisation d'un verre aluminosilicate selon l'une des revendications 1 à 8 en technologie solaire, de préférence pour des cellules solaires, en particulier des cellules solaires en couche mince, comme verre de substrat, verre de superstrat et/ou verre de couverture.

13. Utilisation d'un verre aluminosilicate selon l'une des revendications 1 à 8 pour des applications photovoltaïques Cd-Te ou CIS et CIGS, en particulier des applications photovoltaïques en couche mince, comme verre de substrat, verre de superstrat ou verre de couverture.
